(19) Europäisches Patentamt / European Patent Office / Office européen des brevets

(11) **EP 3 270 315 B1**

(12) **FASCICULE DE BREVET EUROPEEN**

(45) Date de publication et mention
de la délivrance du brevet:
**03.07.2019 Bulletin 2019/27**

(51) Int Cl.:
*G06F 21/34* (2013.01)　　*H04L 9/32* (2006.01)
*H04L 29/06* (2006.01)　　*H04L 9/08* (2006.01)

(21) Numéro de dépôt: **17181309.0**

(22) Date de dépôt: **13.07.2017**

(54) **PROCÉDÉ DE MISE EN RELATION SÉCURISÉE D'UN PREMIER DISPOSITIF AVEC UN DEUXIÈME DISPOSITIF**

VERFAHREN ZUR SICHEREN VERBINDUNG EINES ERSTEN GERÄTES ZU EINEM ZWEITEN GERÄT

METHOD FOR SECURELY LINKING A FIRST DEVICE TO A SECOND DEVICE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2016 FR 1656778**

(43) Date de publication de la demande:
**17.01.2018 Bulletin 2018/03**

(73) Titulaire: **Idemia Identity & Security France
92400 Courbevoie (FR)**

(72) Inventeur: **BRINGER, Julien
92130 Issy-Les-Moulineaux (FR)**

(74) Mandataire: **Regimbeau
20, rue de Chazelles
75847 Paris Cedex 17 (FR)**

(56) Documents cités:
**FR-A1- 2 888 691　　US-A- 5 953 420
US-A1- 2005 069 137　　US-A1- 2006 225 126
US-A1- 2010 319 058**

**Description**

**DOMAINE DE L'INVENTION**

La présente invention concerne un procédé de mise en relation d'un premier dispositif, tel qu'un passeport électronique, avec un deuxième dispositif.

**ETAT DE LA TECHNIQUE**

Un passeport électronique est un dispositif mémorisant des données confidentielles et propre à un utilisateur, et susceptible d'être utilisé pour authentifier cet utilisateur auprès d'une entité tierce.

L'authentification d'un utilisateur propriétaire d'un passeport électronique fait généralement appel à un autre dispositif mis en relation avec le passeport électronique.

On connait par exemple de la spécification TR-03110-1 intitulée « Advanced Security Mechanisms for Machine Readable Travel Documents and eIDAS Token » le protocole « Chip Authentification » comprenant un procédé de mise en relation sécurisée entre un premier dispositif appelé « terminal » et un deuxième dispositif appelé « MRTD chip » susceptible d'être un passeport électronique.

Le terminal mémorise une clé privée et une clé publique associées l'une à l'autre. Le « MRTD chip » mémorise également une clé privée et une clé publique associées l'une à l'autre. Les étapes suivantes sont mises en oeuvre pour mettre en relation le terminal et le MRTD chip de manière sécurisée.

Le procédé de mise en relation du terminal avec le « MRTD chip » comprend les étapes suivantes :

- le terminal génère une première clé (« agreement key ») à partir de la clé privée du terminal et de la clé publique du « MRTD chip » ;
- le « MRTD chip » génère une deuxième clé KA (« agreement key ») à partir de la clé privée du « MRTD chip » et de la clé publique du terminal ;
- les deux dispositifs mettent conjointement en oeuvre un test vérifiant si les première et deuxième clés générées sont identiques, les deux dispositifs étant mis en relation sécurisée seulement si les deux clés générées sont identiques (les deux clés formant ainsi un secret partagé entre les deux dispositifs en présence).

Toutefois, ce procédé présente un inconvénient majeur : sa sécurité repose entièrement sur la détention du premier dispositif (le « MRTD chip ») par son propriétaire légitime. Dès lors, les deux dispositifs pourraient être mis en relation sécurisée de façon indue lorsque le premier dispositif a été subtilisé et qu'il est entre des mains malintentionnées.

On connaît par ailleurs du document US 2005/0069137 un procédé d'authentification mutuelle d'un client et d'un serveur, ce procédé se fondant sur l'utilisation d'un facteur d'authentification mémoriel sous la forme d'un jeton à usage unique (OTP en anglais). Ce procédé présente comme inconvénient que sa sécurité repose entièrement sur la pré-connaissance de ce jeton à usage unique. Un attaquant ayant découvert ce jeton peut, en suivant les étapes du procédé décrit dans ce document, se faire passer pour le client auprès du serveur ou bien se faire passer pour le serveur auprès du client.

**EXPOSE DE L'INVENTION**

Un but de l'invention est de proposer un procédé d'établissement d'un canal entre deux dispositifs, de façon plus sécurisée qu'avec les solutions de l'art antérieur.

Il est dès lors proposé, selon un premier aspect de l'invention, un procédé de mise en relation sécurisée d'un premier dispositif avec un deuxième dispositif, le procédé comprenant des étapes de:

- génération, par le premier dispositif, d'au moins une première donnée dépendant d'une clé privée propre au premier dispositif et dépendant d'une clé publique propre au deuxième dispositif,
- génération, par le deuxième dispositif, d'au moins une deuxième donnée dépendant d'une clé privée propre au deuxième dispositif associée à la clé publique propre au deuxième dispositif, et dépendant d'une troisième donnée, la troisième donnée dépendant d'une donnée publique propre au premier dispositif,
- mise en oeuvre d'un test vérifiant si les première et deuxième données remplissent une condition prédéterminée, et mise en relation sécurisée du premier dispositif avec le deuxième dispositif seulement si la condition prédéterminée est remplie.

Le procédé comprend en outre, avant la génération de la deuxième donnée, l'étape de

- génération de la troisième donnée, la troisième donnée prenant une valeur adaptée pour que la condition prédéterminée soit remplie seulement si des données d'épreuve sont identiques à des données secrètes de référence associées au deuxième dispositif.

La génération des première et deuxième données par les premier et deuxième dispositifs en présence, et la mise en oeuvre du test vérifiant si les première et deuxième données remplissent une condition prédéterminée offre un premier niveau de sécurité, la mise en relation sécurisé entre les premier et deuxième dispositifs étant en effet conditionnée par le respect de cette condition prédéterminée.

En particulier, il est à noter que les clés privées propres à chacun des deux dispositifs en présence interviennent dans la génération des premières et deuxièmes données faisant l'objet du test conditionnant l'établissement d'une mise en relation sécurisée entre les deux dispositifs. Pour faire en sorte que la condition du test soit vérifiée de sorte à déclencher cette mise en relation, un attaquant devrait découvrir non seulement la clé privée du premier dispositif, mais également la clé privée du deuxième dispositif, ce qui est ardu puisque, par définition, une clé privée d'un dispositif n'est jamais communiquée à un tiers. Le fait que les première et deuxième données dépendent des clés privées respectives des dispositifs en présence rend donc le premier niveau de sécurité particulièrement robuste.

Par ailleurs, si les données d'épreuves saisies ne sont pas identiques aux données secrètes propres associées au premier dispositif, alors la troisième clé prend une valeur telle que la condition prédéterminée n'est pas remplie, en conséquence de quoi les premier et deuxième dispositifs ne sont pas mis en relation de façon sécurisée. Il faut au contraire que les données d'épreuve acquises soient identiques aux données secrètes pour qu'une telle mise en relation soit faite. L'étape de génération de la troisième donnée a donc pour effet de fournir un deuxième niveau de sécurité venant s'ajouter au premier niveau de sécurité.

Par ailleurs, comme les données secrètes de référence sont associées au premier dispositif, la mise en relation sécurisée ne peut être mise en oeuvre que si les données d'épreuve qui sont saisies sont bien celles qui correspondent à ce premier dispositif.

En outre, la troisième donnée (utilisée par le deuxième dispositif) dépend de la clé publique du premier dispositif, et la deuxième donnée (générée par le deuxième dispositif) dépend de la troisième donnée. De la sorte, les deux niveaux de sécurité offerts par le procédé proposé sont temporellement entrelacés. Cet entrelacement temporel synergique confère au procédé proposé un niveau de sécurité général largement supérieur à celui conféré par un procédé à deux niveaux de sécurité autonomes, mis en oeuvre séquentiellement.

Le procédé selon le premier aspect de l'invention peut être complété par les caractéristiques suivantes, prises seules ou en combinaison lorsque cela est techniquement possible.

La génération de la troisième donnée peut être mise en oeuvre par un troisième dispositif différent des premier et deuxième dispositifs. Ceci est avantageux car le procédé peut être mis en oeuvre sans modification du deuxième dispositif : celui-ci se borne à utiliser de façon conventionnelle la troisième donnée qu'il reçoit du troisième dispositif.

Les données d'épreuves peuvent sont acquises par le troisième dispositif. De la sorte, il n'y a pas besoin d'ajouter une interface d'acquisition de données d'épreuve au premier dispositif ; il suffit d'utiliser un troisième dispositif comprenant déjà une telle interface d'acquisition, comme par exemple un smartphone. En définitive, l'utilisation du troisième dispositif permet au procédé d'être déployé de façon plus facile dans les systèmes existants.

L'acquisition des données d'épreuve peut être mise en oeuvre en réponse à la réception de la donnée publique propre au premier dispositif.

La clé publique propre au deuxième dispositif peut être transmise au premier dispositif par l'intermédiaire du troisième dispositif.

La troisième donnée peut dépendre à la fois des données d'épreuve et des données secrètes de référence associées au premier dispositif. La troisième donnée peut plus précisément dépendre :

- d'un vérificateur des données secrètes de référence obtenu par un calcul comprenant l'application d'une fonction, par exemple à sens unique, aux données secrètes de référence, et
- de l'image des données d'épreuve par application de la fonction.

La troisième donnée peut dépendre d'une clé masquée, la clé masquée étant générée par le premier dispositif et dépendant :

- des données secrètes de référence associées au deuxième dispositif, et
- de la clé privée propre au premier dispositif et/ou de la clé publique propre au premier dispositif.

La clé masquée *maskedPK* peut résulter du calcul suivant :

$$maskedPK = PKpcd^v$$

où $v = f(PIN)$, $v$ étant un vérificateur des données secrètes de référence et $f$ étant une fonction, par exemple à sens unique.

Alternativement, la clé masquée *maskedPK* peut résulter du calcul suivant :

$$maskedPK = v^{SKpcd}$$

où $v = g^{f(PIN)}$, $v$ étant un vérificateur des données secrètes de référence, $f$ est une fonction, par exemple à sens unique, et g est une donnée prédéterminée d'un groupe fini.

La troisième donnée résulte du calcul suivant :

$$PK' = maskedPK^{\left(\frac{1}{f(PIN')}\right)}$$

où $f$ est une fonction, par exemple à sens unique.

La troisième donnée dépend des données d'épreuve mais ne dépend pas des données secrètes de référence associées au deuxième dispositif, et dans lequel la première donnée dépend des données secrètes de référence associées au deuxième dispositif.

La troisième donnée peut en outre dépendre de l'image des données d'épreuve par application d'une fonction, par exemple à sens unique, et la génération de la première donnée générée par le premier dispositif peut alors utiliser un vérificateur des données secrètes de référence obtenu par un calcul comprenant l'application de la fonction aux données secrètes de référence.

La troisième donnée peut résulter du calcul suivant

$$PK' = PKpcd^{f(PIN')}$$

où $f$ est la fonction.

Ladite fonction peut dépendre d'une donnée de salage aléatoire partagée par le premier dispositif et le troisième dispositif et/ou d'une graine aléatoire mémorisée sélectivement par un troisième dispositif différent des premier et deuxième dispositifs.

Le procédé peut en outre comprendre des étapes de :

- recherche, dans une base de données, d'un vérificateur de données secrètes de référence associé à la clé publique du deuxième dispositif,
- si aucun vérificateur n'est trouvé au cours de la recherche, interruption du procédé de sorte que la génération de la troisième donnée ne soit pas mise en oeuvre.

Le procédé peut également comprendre une mise à jour du vérificateur avant la mise en oeuvre du procédé pour une mise en relation ultérieure.

La première donnée générée par le premier dispositif peut résulter du calcul suivant :

$$K = PKpicc^{SKpcd}$$

La deuxième donnée générée par le deuxième dispositif peut résulter du calcul suivant :

$$K' = PK'^{SKpicc}$$

Le premier dispositif peut en outre transmet au deuxième dispositif une donnée de défi, et la deuxième donnée générée par le deuxième dispositif comprendre : une donnée de preuve calculée à partir de la clé privée du deuxième dispositif et de la donnée de défi et une donnée calculée à partir de la troisième donnée. La première donnée générée par le premier dispositif dépend alors de la donnée de défi.

Le test vérifiant si les première et deuxième données remplissent une condition prédéterminée peut comprendre des sous-étapes de :

- transmission de l'au moins une deuxième donnée au premier dispositif,
- vérification, par le premier dispositif, si les valeurs de la première donnée et de la deuxième donnée sont solution d'une équation prédéterminée, la condition prédéterminée étant remplie seulement si la vérification est positive.

La condition prédéterminée peut être remplie seulement si les première et deuxième données générées respectivement par le premier dispositif et par le deuxième dispositif sont identiques.

Le test vérifiant si les première et deuxième données remplissent une condition prédéterminée peut en outre comprendre :

- le chiffrement, par l'un des premier et deuxième dispositifs, d'un message en utilisant, parmi les première et deuxième données, la donnée qui a été générée par ce dispositif,
- transmission du message chiffré à l'autre des premier et deuxième dispositifs,
- tentative de déchiffrement, par l'autre des premier et deuxième dispositifs, du message chiffré en utilisant, parmi les première et deuxième données, la donnée qui a été générée par cet autre dispositif, la mise en relation étant mise en oeuvre seulement si le déchiffrement du message réussit.

Le deuxième dispositif peut être un jeton d'authentification matériel, tel qu'un passeport numérique, une carte d'identité numérique ou une carte bancaire.

La mise en relation entre le premier et le deuxième dispositif peut comprendre l'établissement d'un canal de communication sécurisé entre le premier dispositif et le deuxième dispositif.

La clé privée propre au premier dispositif et/ou la clé publique propre au premier dispositif peuvent être des clés éphémères utilisées pour une seule mise en relation.

Les données d'épreuves peuvent être un mot de passe acquis par une interface de saisie, ou être représentatives d'une donnée biométrique.

Il est également proposé, selon un deuxième aspect de l'invention, un produit programme d'ordinateur comprenant des instructions de code de programme pour l'exécution des étapes d'un procédé de mise en relation sécurisée d'un premier dispositif avec un deuxième dispositif, lorsque ce programme est exécuté par au moins un processeur, dans lequel le premier dispositif est configuré pour générer au moins une première donnée dépendant d'une clé publique propre au deuxième dispositif et dépendant d'une clé privée propre au premier dispositif, le procédé comprenant les étapes de :

- transmission au deuxième dispositif d'une troisième donnée en vue d'une génération, par le deuxième dispositif, d'au moins une deuxième donnée dépendant de la troisième donnée transmise, et dépendant d'une clé privée propre au deuxième dispositif associée à la clé publique propre au deuxième dispositif, la troisième donnée dépendant d'une clé publique propre au premier dispositif, de sorte qu'un test vérifiant si les première et deuxième données remplissent une condition prédéterminée puisse être mis en oeuvre, et que les premier et deuxième dispositifs soient mis en relation sécurisée seulement si la condition est remplie.
- génération de la troisième donnée, la troisième donnée prenant une valeur adaptée pour que la condition prédéterminée soit remplie seulement si des données d'épreuve sont identiques à des données secrètes de référence associées au deuxième dispositif.

Il est également proposé, selon un troisième aspect de l'invention, un produit programme d'ordinateur comprenant des instructions de code de programme pour l'exécution des étapes d'un procédé de mise en relation sécurisée d'un premier dispositif avec un deuxième dispositif, lorsque ce programme est exécuté par au moins un processeur, le procédé comprenant des étapes de :

- génération d'au moins une première donnée dépendant d'une clé privée propre au premier dispositif et dépendant d'une clé publique reçue,
- émission d'une clé publique propre au premier dispositif associée à la clé privée propre au premier dispositif, en vue de la génération, par le deuxième dispositif, d'au moins une deuxième donnée qui dépend

  ○ d'une clé privée propre au deuxième dispositif associée à la clé publique propre au deuxième dispositif, et
  ○ d'une troisième donnée, la troisième donnée dépendant de la clé publique émise,

- participation à un test vérifiant si les première et deuxième données remplissent une condition prédéterminée, et mise en relation sécurisée avec le deuxième dispositif seulement si la condition prédéterminée est remplie,

dans lequel la première donnée est de valeur adaptée pour que la condition prédéterminée soit remplie seulement si des données secrètes de référence associées au deuxième dispositif sont identiques à des données d'épreuve.

Il est également proposé, selon un quatrième aspect de l'invention constituant une solution alternative au troisième aspect de l'invention pour résoudre le problème posé, un produit programme d'ordinateur comprenant des instructions de code de programme pour l'exécution des étapes d'un procédé de mise en relation sécurisée d'un premier dispositif avec un deuxième dispositif, lorsque ce programme est exécuté par au moins un processeur, le procédé comprenant des étapes de :

- génération d'au moins une première donnée dépendant d'une clé privée propre au premier dispositif, et à partir d'une clé publique propre au deuxième dispositif,
- génération d'une clé masquée, la clé masquée dépendant de la clé privée propre au dispositif et/ou d'une clé publique propre au premier dispositif associée à la clé privée propre au premier dispositif,
- émission de la clé masquée, en vue de la génération, par le deuxième dispositif, d'au moins une deuxième donnée dépendant :

  ◦ d'une clé privée propre au deuxième dispositif associée à la clé publique propre au deuxième dispositif et
  ◦ d'une troisième donnée, la troisième donnée dépendant de la clé masquée émise,

- participer à un test vérifiant si les première et deuxième données remplissent une condition prédéterminée, et mise en relation sécurisée avec le deuxième dispositif seulement si la condition prédéterminée est remplie,

dans lequel la clé masquée a une valeur adaptée pour que la condition prédéterminée soit remplie seulement si les données secrètes de référence associées au deuxième dispositif sont identiques à des données d'épreuve.

Il est également proposé, selon un cinquième aspect de l'invention, un dispositif pour mettre en relation sécurisée un premier dispositif avec un deuxième dispositif, dans lequel le premier dispositif est configuré pour générer au moins une première donnée dépendant d'une clé publique propre au deuxième dispositif et dépendant d'une clé privée propre au premier dispositif, le dispositif comprenant :

- une interface de communication configurée pour transmettre au deuxième dispositif une troisième donnée en vue d'une génération, par le deuxième dispositif, d'au moins une deuxième donnée dépendant de la troisième donnée transmise et dépendant d'une clé privée propre au deuxième dispositif associée à la clé publique propre au deuxième dispositif, la troisième donnée dépendant d'une clé publique propre au premier dispositif associée à la clé privée propre au premier dispositif, de sorte qu'un test vérifiant si les première et deuxième données remplissent une condition prédéterminée soit mis en oeuvre, et que les premier et deuxième dispositifs soient mis en relation sécurisée seulement si la condition est remplie,
- au moins un processeur configuré pour générer la troisième donnée, la troisième donnée prenant une valeur adaptée pour que la condition prédéterminée soit remplie seulement si des données d'épreuve sont identiques à des données secrètes de référence associées au deuxième dispositif.

Il est également proposé, selon un sixième aspect de l'invention, un dispositif destiné à être mis en relation sécurisée avec un deuxième dispositif, le dispositif comprenant :

- une interface de communication configurée pour :

  ◦ émettre une clé publique propre au dispositif, en vue de la génération, par le deuxième dispositif, d'au moins une deuxième donnée dépendant d'une clé privée propre au deuxième dispositif et dépendant d'une troisième donnée, la troisième donnée dépendant de la clé publique émise,

- au moins un processeur configuré pour :

  ◦ générer au moins une première donnée dépendant d'une clé privée propre au dispositif associée à la clé publique propre au dispositif et dépendant d'une clé publique propre au deuxième dispositif associée à la clé publique propre au deuxième dispositif,
  ◦ participer à un test vérifiant si les première et deuxième données remplissent une condition prédéterminée, et participer à une mise en relation sécurisée avec le deuxième dispositif seulement si la condition prédéterminée est remplie,

dans lequel la première donnée est de valeur adaptée pour que la condition prédéterminée soit remplie seulement si des données secrètes de référence associées au deuxième dispositif sont identiques à des données d'épreuve.

Il est également proposé, selon un septième aspect de l'invention constituant une solution alternative au sixième aspect de l'invention pour résoudre le problème posé, un dispositif destiné à être mis en relation sécurisée avec un deuxième dispositif, le dispositif comprenant :

- une interface de communication,
- au moins un processeur configuré pour :

  ◦ générer au moins une première donnée dépendant d'une clé privée propre au premier dispositif et d'une clé publique propre au deuxième dispositif,
  ◦ générer une clé masquée, la clé masquée dépendant de la clé privée propre au dispositif et/ou d'une clé publique propre au premier dispositif associée à la clé privée propre au premier dispositif,
  ◦ commander l'émission par l'interface de communication de la clé masquée, en vue de la génération, par le deuxième dispositif, d'au moins une deuxième donnée dépendant :

    ▪ d'une clé privée propre au deuxième dispositif associée à la clé publique propre au deuxième dispositif et
    ▪ d'une troisième donnée, la troisième donnée dépendant de la clé masquée émise,

  ◦ participer à un test vérifiant si les première et deuxième données remplissent une condition prédéterminée, et mise en relation sécurisée avec le deuxième dispositif seulement si la condition prédéterminée est remplie,

dans lequel la clé masquée émise a une valeur adaptée pour que la condition prédéterminée soit remplie seulement si les données secrètes de référence associées au deuxième dispositif sont identiques à des données d'épreuve.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- Les figures 1 et 2 représentent de façon schématique un système d'authentification selon un mode de réalisation de l'invention.
- Les figures 3 à 8 sont des diagrammes représentatifs de six modes de réalisations différents d'un procédé de mise en relation d'un premier dispositif et d'un deuxième dispositif.

Sur l'ensemble des figures, les éléments similaires portent des références identiques.

## DESCRIPTION DETAILLEE DE L'INVENTION

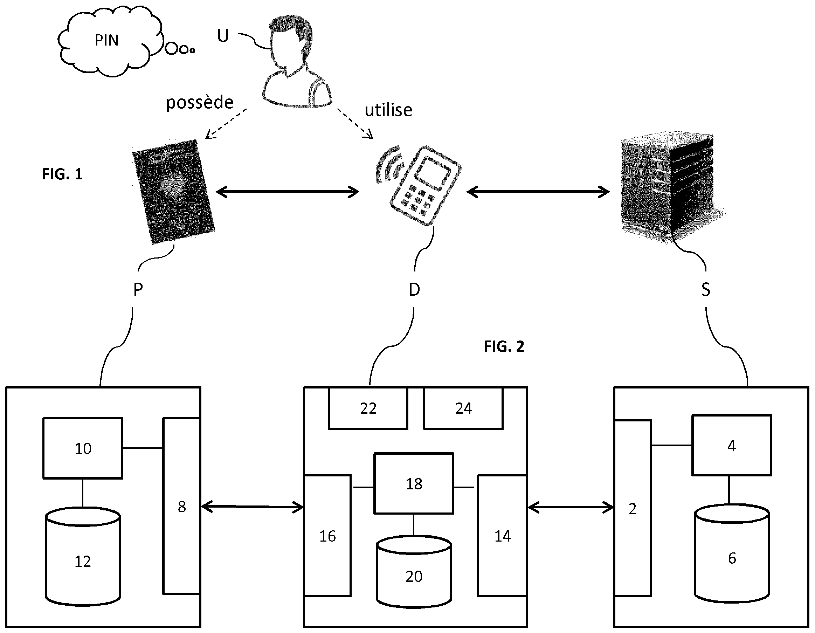

En référence aux **figures 1 et 2,** un système d'authentification comprend trois dispositifs : un premier dispositif S, un deuxième dispositif P et un troisième dispositif D.

Le premier dispositif S comprend une interface de communication 2, au moins un processeur 4, et une mémoire 6.

L'interface de communication 2 est configurée pour communiquer avec le troisième dispositif D. Cette interface est par exemple de type sans fil (Wi-Fi, Bluetooth, NFC, réseau cellulaire 3G/4G, etc.) ou filaire (Ethernet, etc.).

Le processeur 4 est configuré pour exécuter des calculs de données mémorisées par la mémoire ou reçues via l'interface de communication 2.

La mémoire 6 est configurée pour mémoriser des données organisées en base de données. La mémoire 6 comprend par exemple une unité mémoire persistante comprenant au moins un des éléments suivants : disque dur, disque SSD, mémoire flash, etc. La mémoire comprend également une unité mémoire temporaire (RAM) dont le contenu est effacé à sa mise hors tension.

Le premier dispositif S est par exemple un serveur. Le serveur assure un service à accès restreint, requérant une authentification préalable.

Le deuxième dispositif P comprend une interface de communication 8, au moins un processeur 10, et une mémoire 12, susceptibles de présenter les mêmes caractéristiques que les composants correspondants du premier dispositif S.

Est mémorisée dans la mémoire 12 une clé privée *SKpicc* propre au deuxième dispositif P. Cette clé privée *SKpicc* a vocation à rester secrète, donc à ne jamais être communiquée à l'extérieur du deuxième dispositif P.

Est également mémorisée dans la mémoire une clé publique *PKpicc* associée à la clé privée *SKpicc.* Cette clé publique peut, comme son nom l'indique, être communiquée par le deuxième dispositif P à un autre dispositif.

Le deuxième dispositif P est par exemple (ou est compris dans) un jeton d'authentification matériel propre à un utilisateur U : un passeport électronique, une carte d'identité électronique, une carte bancaire, etc. Le deuxième dispositif P peut alors se présenter sous la forme d'une puce électronique portative. Ces deux clés sont par exemple déterminées au cours d'une étape de pré-configuration, avant ou au cours de la première utilisation du deuxième dispositif P par son propriétaire légitime.

Les deux clés du deuxième dispositif P sont liées par la relation suivante (permettant de déduire la clé publique de la clé privée) :

$$PKpicc = g^{SKpicc}$$

où g est un élément prédéterminé d'un groupe fini, dont la loi est notée ici multiplicativement, préalablement mémorisé dans la mémoire du premier dispositif. Le groupe en question peut être un groupe d'entiers ou bien un groupe de points d'une courbe elliptique.

Le troisième dispositif D comprend au moins une interface de communication 14, 16, au moins un processeur 18 et une mémoire 20.

L'interface de communication 14, 16 est configurée pour communiquer avec les premier et deuxième dispositifs S, P. En variante, deux interfaces de communications 14 et 16 distinctes sont prévus pour communiquer respectivement avec le premier dispositif S et le deuxième dispositif P. Dans ce cas, les deux interfaces de communication 14 et 16 peuvent être de types différents correspondant aux types respectifs des interfaces de communication 2 et 8.

Le processeur 18 et la mémoire 20 peuvent être similaires à ceux des dispositifs S et/ou P.

Le troisième dispositif D peut également comprendre un écran d'affichage 22.

Le troisième dispositif comprend par ailleurs une interface d'acquisition 24 de données d'épreuve.

L'interface d'acquisition 24 peut ainsi comprendre une interface de saisie de données, par exemple un écran tactile ou un clavier, et/ou comprendre un capteur biométrique.

L'interface d'acquisition peut également comprendre une caméra.

Le troisième dispositif D est par exemple un terminal mobile, tel qu'un smartphone. Le troisième dispositif D n'a pas besoin d'être fortement sécurisé.

### Procédé de mise en relation sécurisée entre le premier dispositif et le deuxième dispositif

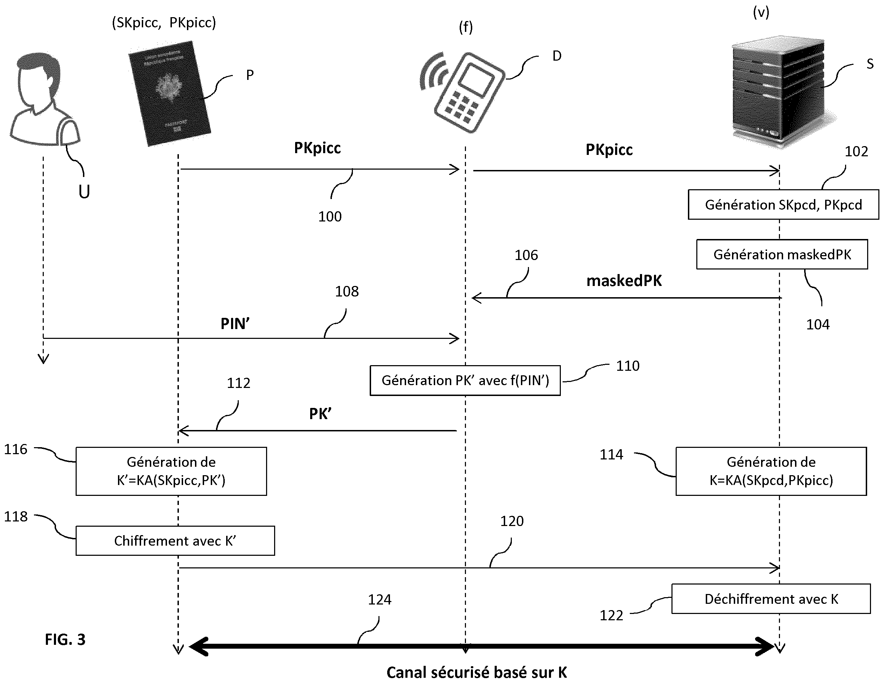

Plusieurs modes de réalisation d'un procédé de mise en relation du premier dispositif S avec le deuxième dispositif P sont décrits ci-après en relation avec les figures 3 à 7.

Dans ce qui suit, les calculs mis en oeuvre par les dispositifs S, P, D, sont implicitement mis en oeuvre par leurs processeurs 4, 10, 18 respectifs exécutant des programmes d'ordinateurs. En outre la transmission de données depuis un de ces trois dispositifs vers un autre de ces trois dispositifs sollicite implicitement les interfaces de communication associées 2, 8, 14 et/ou 16.

*A) Phase préliminaire d'enrôlement*

Au cours d'une phase préliminaire d'enrôlement, des données secrètes de référence *PIN* associées au deuxième dispositif P sont déterminées.

Les données secrètes de référence sont censées être connues seulement du possesseur légitime U du deuxième dispositif P.

Les données secrètes sont par exemple acquises par l'interface d'acquisition du troisième dispositif D, puis transmises au premier dispositif S. Par exemple, l'utilisateur tape via l'interface de saisie un code personnel (par exemple un code « PIN » à plusieurs caractères) qu'il a mémorisé, les données secrètes *PIN* étant alors ce code personnel. En variante, les données secrètes sous forme de code personnel *PIN* sont déterminées par le premier dispositif S et sont communiquées au propriétaire légitime U du deuxième dispositif P par des moyens appropriés supposés de confiance.

Le premier dispositif S génère un vérificateur *v* à partir des données secrètes *PIN* et d'une fonction *f* prédéterminée. En variante, le vérificateur *v* est généré par le troisième dispositif D et transmis par ce dernier au premier dispositif S.

La fonction *f* est de préférence une fonction à sens unique, par exemple une fonction de hachage.

Le vérificateur *v* est l'image des données secrètes par la fonction prédéterminée, comme l'exprime la relation suivante :

$$v = f(PIN)$$

En variante, le vérificateur est généré comme suit :

$$v = g^{f(PIN)}$$

De préférence, la fonction prédéterminée *f* dépend d'une donnée de salage aléatoire partagée par le premier dispositif S et le troisième dispositif D et/ou d'une graine aléatoire mémorisée sélectivement par le troisième dispositif D.
L'image de données w par la fonction prédéterminée *f* peut alors s'écrire de l'une des façons suivantes :

$$f(w) = H(w, r)$$

$$f(w) = H(w, s)$$

$$f(w) = H(w, s, r)$$

où H est une fonction prédéterminée (de préférence à sens unique, voire de hachage), s désigne la donnée de salage et r désigne la graine aléatoire. L'utilisation de la donnée de salage et/ou de la graine permet d'augmenter un aléa de valeurs possibles pour le vérificateur *v*, rendant encore plus difficile la détermination des données secrètes PIN à partir du vérificateur.
Le vérificateur *v* calculé est mémorisé dans la mémoire du premier dispositif S.
Par ailleurs, le deuxième dispositif P transmet sa clé publique *PKpicc* au premier dispositif S, par l'intermédiaire du troisième dispositif D.
La clé publique *PKpicc* est également mémorisée dans la mémoire 6 du premier dispositif S.
La mémoire 6 du premier dispositif S comporte une base de données comprenant plusieurs entrées, chaque entrée associant une clé publique avec un vérificateur *v* de données secrètes de référence *PIN.* En d'autres termes, chaque entrée concerne une personne propriétaire d'un deuxième dispositif P et censée connaître les données secrètes de références *PIN* correspondant au vérificateur *v*.
En revanche, les données secrètes de référence *PIN* ne sont de préférence elles-mêmes pas mémorisées dans la mémoire 6 du premier dispositif S, pour rendre plus difficile la détermination par un tiers malveillant de la valeur de ces données secrètes de référence.
En particulier, une fonction à sens unique telle qu'une fonction de hachage étant très difficilement inversible, il est très difficile de déduire les données secrètes *PIN* du vérificateur *v* mémorisé. En conséquence, même si un tiers malveillant parvenait à accéder à la base de données, il ne serait pas capable de retrouver des données secrètes de référence.

*B) Echange de premières et deuxièmes données par les dispositifs S et P*

Il est supposé que, postérieurement à l'enrôlement, le premier dispositif S et le deuxième dispositif **P** doivent être mis en relation.
En référence à la **figure 3,** un premier mode de réalisation d'un procédé pour mettre en relation sécurisé les dispositifs P et S comprend les étapes suivantes.
Un canal de communication non sécurisé est établi entre le premier dispositif S et le deuxième dispositif P. Ce canal de communication non sécurisé passe par le troisième dispositif D, qui agit comme un intermédiaire entre le premier dispositif S et le deuxième dispositif P. Sauf mention contraire, toutes les données transmises d'un dispositif à l'autre dans ce qui suit sont transmises dans le canal non sécurisé.
Le deuxième dispositif P transmet 100 sa clé publique *PKpicc* au premier dispositif par l'intermédiaire du troisième dispositif D. Le premier dispositif S vérifie que si la clé publique *PKpicc* est bien une clé référencée dans la base de données mémorisée dans la mémoire 6 du premier dispositif S.
Alternativement, chaque entrée de la base de données comporte également un identifiant propre à un utilisateur ; le deuxième dispositif P transmet un identifiant qui lui est propre au premier dispositif S en lieu et place de sa clé publique *PKpicc*. Le premier dispositif S recherche alors si une clé publique associée à l'identifiant reçu est référencée dans la base de donnée.
Si la clé n'y était pas référencée, cela signifie que la clé reçue *PKpicc* ne provient pas d'un dispositif P valide (par exemple, le dispositif **P** est un passeport électronique périmé, ou bien un dispositif cherchant à se faire passer pour un passeport électronique valide à des fins de piratage). Dans ce cas, le processeur 4 génère un message d'erreur et le procédé se termine.

Si la clé est bien référencée *PKpicc* dans la base de données, et en particulier associée à un vérificateur *v* de données secrètes de référence produit au cours d'une phase préliminaire d'enrôlement (ce qui est le cas ici), cela signifie que le propriétaire légitime du deuxième dispositif P est connu, et que celui-ci est censé avoir mémorisé les données secrètes de référence correspondant au vérificateur *v*. Dans ce cas, le procédé se poursuit, avec les étapes ci-dessous.

Le premier dispositif S génère 102 une clé privée *SKpcd* qui lui est propre.

Le premier dispositif S génère en outre 102 une clé publique *PKpcd* associée à la clé privée *SKpcd*. Similairement à la clé publique *PKpicc* du deuxième dispositif **P,** la clé publique *PKpcd* est par exemple le résultat du calcul suivant :

$$PKpcd = g^{SKpcd}$$

Les deux clés *SKpcd* et *PKpcd* du premier dispositif S sont de préférence des clés éphémères, qui ne seront utilisés qu'une seule fois, pour une seule mise en relation. En d'autres termes, lorsque le premier dispositif S recevra ultérieurement une clé publique d'un dispositif agréé tel que le dispositif P, pour une mise en relation sécurisée ultérieure, de nouvelles clés *SKpcd* et *PKpcd* seront générées 102 par le premier dispositif S.

Le premier dispositif S génère 104 une clé masquée *maskedPK* à partir de la clé publique *PKpcd* ou de la clé privée *SKpcd*, et à partir du vérificateur *v* des données secrètes de référence.

Dans le cas où *v* = *f(PIN)*, le calcul mis en oeuvre par le processeur 4 du premier dispositif S pour calculer la clé masquée est le suivant :

$$maskedPK = PKpcd^{v}$$

Dans le cas où *v* = *g^{f(PIN)}*, le calcul mis en oeuvre par le processeur du premier dispositif S pour calculer la clé masquée est le suivant :

$$maskedPK = v^{SKpcd}$$

Le premier dispositif S transmet 106 la clé masquée *maskedPK* au troisième dispositif D. Ainsi, la clé publique *PKpcd* du premier dispositif S n'est pas transmise au troisième dispositif D et ne peut donc pas être interceptée par une surveillance des communications entre les dispositifs D et S.

Un autre avantage conféré par la transmission de la clé masquée *maskedPK* au lieu de la transmission de la clé publique *PKpcd* est qu'elle permet de se protéger contre une prise de contrôle du troisième dispositif D par un tiers malveillant (par exemple, l'utilisateur U s'est fait voler son smartphone D). Si le troisième dispositif D recevait la clé *PKpcd,* il pourrait alors la transmettre tel quelle au deuxième dispositif P et donc, à la fin de la mise en oeuvre du procédé de mise en relation, réussir à faire croire à au premier dispositif S qu'il a utilisé les bonnes données secrètes de référence PIN (mais sans en avoir eu l'utilité, vu qu'il n'a pas utilisé la clé masquée *maskedPK*).

En réponse à la réception de la clé masquée *maskedPK,* le troisième dispositif D affiche sur son écran d'affichage un message invitant l'utilisateur du troisième dispositif D à entrer des données d'épreuve via l'interface d'acquisition.

L'interface d'acquisition 24 acquiert 108 les données d'épreuves *PIN'* fournies par l'utilisateur. Le propriétaire légitime du deuxième dispositif P est bien entendu censé entrer la valeur *PIN* des données secrètes de référence associées à ce deuxième dispositif P.

Par exemple, l'utilisateur tape, via l'interface de saisie 24, des données d'épreuve sous la forme d'un code de valeur *PIN'. Le* troisième dispositif D génère 110 une clé *PK'* à partir de la clé masquée *maskedPK* reçue du premier dispositif P, et à partir des données d'épreuves acquises *PIN'*.

La clé PK' est par exemple calculée comme suit par le troisième dispositif D:

$$PK' = maskedPK^{(1/f(PIN'))}$$

Le troisième dispositif D transmet 112 la clé *PK'* au deuxième dispositif P.

*C) Traitements opérés sur la base des données échangées*

Le premier dispositif S génère au moins une première donnée à partir de sa clé privée *SKpcd* et à partir de la clé publique *PKpicc* reçue du deuxième dispositif P.

Par ailleurs, le deuxième dispositif P génère au moins une deuxième donnée à partir de sa clé privée *SKpicc* et de la clé *PK'*, laquelle dépendant de la clé publique *PKpcd* du premier dispositif S.

Dans le premier mode de réalisation tel qu'illustré sur la figure 3, la première donnée est une première clé *K* et la deuxième donnée est une deuxième clé *K'*.

Les clés *K* et *K'* sont des clés de Diffie-Hellman.

Par exemple, le premier dispositif génère 114 la clé K comme suit :

$$K = PKpicc^{SKpcd}$$

Le deuxième dispositif P génère 116 la clé *K'* comme suit :

$$K' = PK'^{SKpicc}$$

Au vu des équations qui précèdent, cette clé K' est en fait égale à :

$$K' = g^{SKpicc * SKpcd * f(PIN)/f(PIN')}$$

En particulier, si *PIN = PIN'* (c'est-à-dire si les données d'épreuves sont égale aux données secrètes de référence), alors :

$$K' = g^{SKpicc*SKpcd} = K$$

Est ensuite mis en oeuvre un test vérifiant si les première et deuxième clés remplissent une condition prédéterminée.

Le premier dispositif S et le deuxième dispositif P participent à ce test.

Dans le premier mode de réalisation, la condition prédéterminée est une condition d'identité entre les deux clés *K* et *K'* calculées par le premier dispositif S et le deuxième dispositif P. En d'autres termes, la condition prédéterminée est remplie seulement si les deux clés *K* et K' générées s'avèrent être identiques, constituant alors un secret partagé entre le premier dispositif S et le deuxième dispositif P.

Dans le cas où les équations et calculs présentés ci-dessus sont mis en oeuvre, les deux clés *K* et *K'* seront identiques seulement si *PIN = PIN'.* En définitive, la clé *PK'* prend une valeur adaptée pour que la condition prédéterminée soit remplie seulement si les données d'épreuve acquises *PIN'* sont identiques aux données secrètes de référence *PIN* propres à l'utilisateur.

Les deux clés *K* et *K'* ne sont de préférence pas directement comparées ; ceci impliquerait en effet de transmettre l'une des deux clés via le canal non sécurisé, ce que l'on veut éviter, de sorte que le secret partagé ne puisse pas être intercepté. Dès lors, le test vérifiant si la condition est prédéterminée peut comprendre les étapes suivantes.

Le deuxième dispositif P chiffre 118 un message prédéterminé (la chaine de caractères « Hello World ! » par exemple) en utilisant directement ou indirectement la clé *K'* générée par ce deuxième dispositif P. Par exemple, le deuxième dispositif P génère une clé de chiffrement *Kenc* à partir de la clé *K'* et chiffre le message avec cette clé de chiffrement *Kenc.*

Le deuxième dispositif P transmet 120 le message chiffré au premier dispositif S par l'intermédiaire du troisième dispositif D.

Le premier dispositif S tente alors de déchiffrer 122 le message chiffré en utilisant directement ou indirectement la clé *K* qu'il a généré de son côté. Par exemple, le premier dispositif S génère une clé de déchiffrement à partir de la clé K générée et déchiffre le message à l'aide de la clé de déchiffrement.

Si le déchiffrement est mis en oeuvre avec succès, la condition prédéterminée est remplie. Sinon, cette condition prédéterminée n'est pas remplie.

Si la condition prédéterminée est remplie, alors le premier dispositif S et le deuxième dispositif P se mettent en relation mutuelle de manière sécurisée. Si la condition n'est pas remplie, il n'y a pas de mise en relation sécurisée.

Ainsi, pour que la mise en relation sécurisée entre le dispositif P et le dispositif S soit mise en oeuvre, deux conditions cumulatives doivent en définitive être respectées: il faut non seulement le deuxième dispositif P soit reconnu comme authentique par le premier dispositif S, mais également que des données d'épreuves qui correspondent au deuxième dispositif P soient saisies.

La mise en relation comprend par exemple l'établissement 124 d'un canal de communication sécurisé entre le premier dispositif S et le deuxième dispositif P. Sinon le canal sécurisé n'est pas établi. Le canal de communication sécurisé est établi au moyen du secret partagé $K = K'$, selon une méthode connue.

Le canal de communication sécurisé peut passer par le troisième dispositif D, auquel cas son établissement comprend l'établissement d'un premier sous-canal sécurisé entre le premier dispositif S et le troisième dispositif D, et d'un deuxième sous-canal sécurisé entre le troisième dispositif D et le deuxième dispositif P. Le troisième dispositif sert alors de relai pour les données circulant dans le canal sécurisé établi.

Au cours du procédé de mise en relation ainsi proposé, le troisième dispositif D n'a pas connaissance des données les plus sensibles tel que la clé *SKpicc* et les données secrètes de référence *PIN*. C'est la raison pour laquelle le dispositif D n'a pas besoin d'être fortement sécurisé.

Il a été vu précédemment que la validité de la clé publique *PKpicc* était vérifiée par le premier dispositif S, et que le procédé pouvait être interrompu prématurément avant que soit générées les clés *maskedPK* ou *PK'*. Ceci permet de se protéger des attaques par dictionnaire au moyen d'un dispositif essayant de se faire passer pour un dispositif P agréé transmettant une fausse clé *PKpicc* au premier dispositif S, interceptant la clé *maskedPK* émise par le premier dispositif S ou la clé PK' émise par le troisième dispositif D, et tentant d'en déduire la clé *K'*. En effet, quand la clé *PKpicc* n'est pas référencée dans la base de données, ces clés ne sont pas transmises, rendant impossibles de telles attaques par simple écoute des communications entre les dispositifs S, P, D en présence.

Avant une mise en relation ultérieure avec un autre dispositif, le vérificateur est de préférence mis à jour par le premier dispositif S.

Par exemple, il peut être prévu, dans le cas où $v = f(PIN)$, de mettre à jour le vérificateur v par une itération du type

$$v := f(v)$$

Lors d'une mise en oeuvre suivante du procédé, sera donc utilisée $f := f(f(.))$. Cette mise à jour offre une protection supplémentaire contre les attaques par rejeu.

Une autre mise à jour possible pour le vérificateur v est la suivante :

$$v := H(v, time)$$

où *time* est une valeur temporelle mesurée à un instant de référence, par exemple au début de la mise en oeuvre du procédé de mise en relation (à la réception de la clé *PKpicc*). Cette valeur temporelle *time* peut dépendre d'un aléa déterminé par le troisième dispositif D et transmis au premier dispositif S.

La mise à jour est particulièrement simple à mettre en oeuvre à la volée lorsque $v = f(PIN)$.

Le premier mode de réalisation décrit ci-dessus (et ses différentes variantes) est avantageusement compatible avec le protocole « Chip Authentification » dans sa version 1 (CAv1) défini dans la spécification TR-03110-1 intitulée « Advanced Security Mechanisms for Machine Readable Travel Documents and eIDAS Token », ainsi qu'avec au moins les versions 2 et 3 ultérieures de ce protocole (CAv2, CAv3).

En particulier, tous les traitements mis en oeuvre par le deuxième dispositif P sont conformes au protocole CAv1 ; autrement dit, le procédé proposé peut être mis en oeuvre au moyen d'un deuxième dispositif P qui implémente ce protocole CAv1, sans qu'il soit requis de modifier son fonctionnement interne.

Le premier mode de réalisation étend cependant le protocole « Chip Authentification» en y ajoutant un niveau supplémentaire de sécurité (via au moins les étapes 104 et 110 mises en oeuvre par les dispositifs D et S et rapportant aux données secrètes *PIN* de référence et aux données d'épreuve *PIN'*).

Une fois que le canal de communication sécurisé est établi (appelé « secure channel » dans la spécification TR-03110-1), une authentification passive (« passive authentication ») peut être mise en oeuvre.

Une telle authentification passive peut par exemple servir à conditionner l'accès, par un utilisateur, à un service rendu par le premier dispositif S. Par exemple, l'authentification peut servir à conditionner l'accès par l'utilisateur à une zone sécurisée d'un site web hébergé par le dispositif S ou un par serveur tiers communiquant avec le dispositif S.

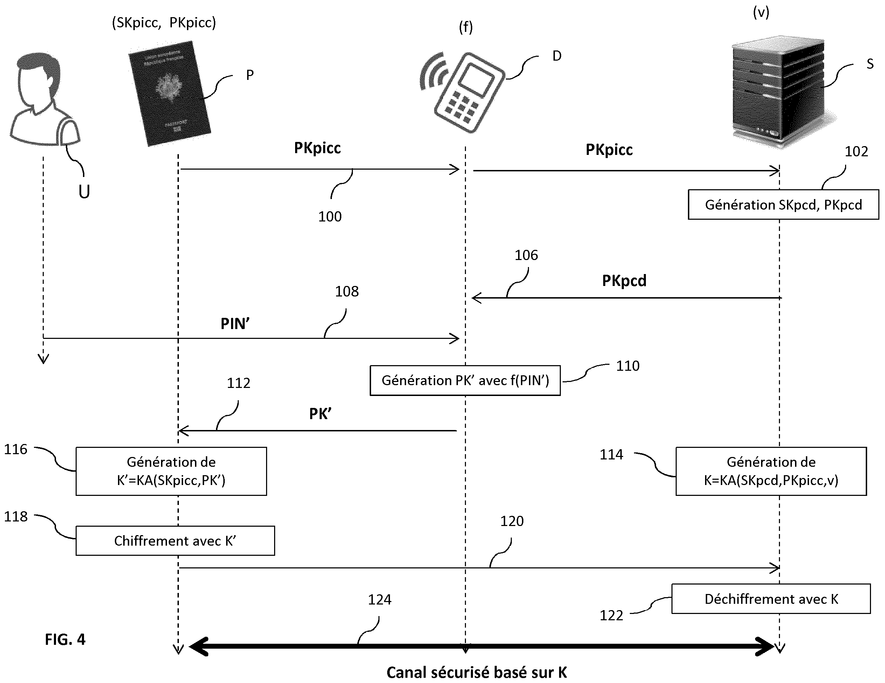

En référence à la **figure 4,** un deuxième mode de réalisation d'un procédé pour mettre en relation sécurisé les dispositifs P et S diffère du premier mode de réalisation par les caractéristiques suivantes.

Le premier dispositif S transmet au troisième dispositif sa clé publique *PKpcd,* et c'est sur la base de cette clé publique *PKpcd* que le troisième dispositif génère la clé PK' dans l'étape 110. Aucune clé masquée n'est générée par le premier dispositif S.

Le troisième dispositif D peut alors mettre en oeuvre le calcul suivant pour générer 110 la clé *PK',* sur la base des données d'épreuve acquises *PIN'* et de la fonction prédéterminée f :

$$PK' = \text{PKpcd}^{f(PIN')}$$

A la différence du premier mode de réalisation utilisant une clé masquée, la clé *PK'* ne dépend pas des données secrètes de référence *PIN*. Le calcul mis en oeuvre au cours de l'étape 110 est donc différent de celui de la variante du premier mode de réalisation selon la figure 3 avec clé masquée.

Le deuxième dispositif P calcule la clé K' de la manière suivante :

$$K' = KA(Skpicc, PK') = PK'^{SKpicc}$$

Par ailleurs, le premier dispositif S calcule 114 alors la clé K de la façon suivante :

$$K = PKpicc^{(SKpcd * f(PIN))}$$

A la différence de la variante avec clé masquée, la première donnée (clé K) générée 114 par le premier dispositif S dépend des données secrètes de référence (plus exactement du vérificateur *v* = *f(PIN)*).

En développant les calculs sous l'hypothèse que *v* = *f(PIN)*, on a :

$$K = g^{SKpicc * SKpcd * f(PIN)}$$

$$K' = g^{SKpicc * SKpcd * f(PIN')}$$

Par conséquent, comme dans la variante décrite précédemment utilisant la clé masquée *maskedPK, PIN* = *PIN'* si et seulement si *K* = *K'*.

En conséquence, la valeur de la clé *PK'* calculée de la sorte demeure adaptée pour que la condition prédéterminée soit remplie seulement si les données d'épreuve acquises sont identiques aux données secrètes de référence propres à l'utilisateur.

Le deuxième mode de réalisation sans clé masquée est plus simple à mettre en oeuvre que le premier mode de réalisation avec clé masquée, dans la mesure où le premier dispositif S calcule une exponentiation en moins par rapport au premier mode de réalisation.

Un autre avantage du deuxième mode de réalisation est que les échanges de données entre les deux dispositifs S et P à mettre en relation en vue de générer la première donnée K et la deuxième donnée K' peuvent être mis en oeuvre avant que le vérificateur ne soit calculé. Ceci offre donc plus de souplesse pour la mise en oeuvre du procédé.

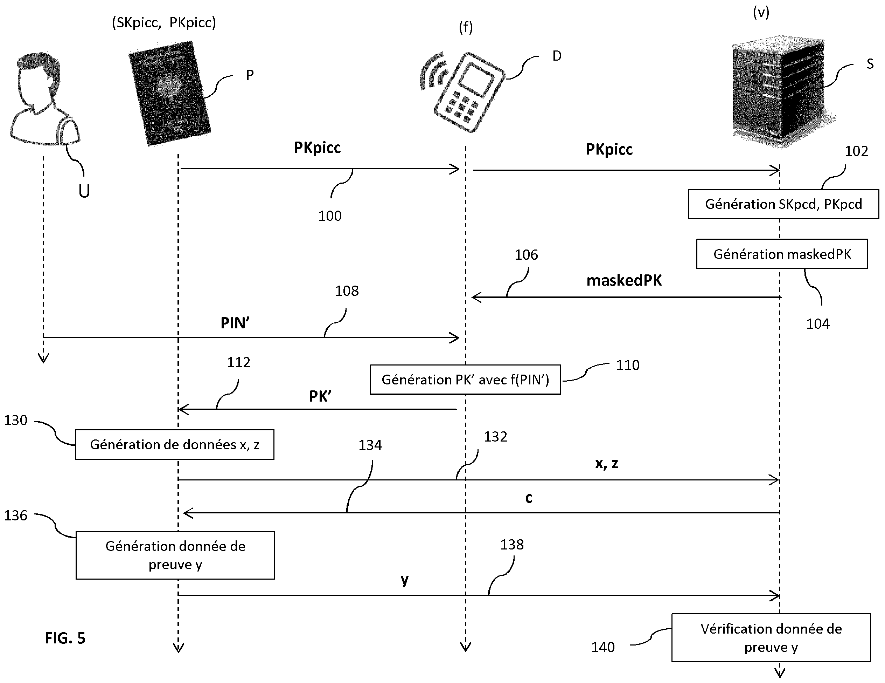

Dans un troisième mode de réalisation illustré en **figure 5**, les traitements opérés par les dispositifs P et S sur la base des clés *PK'* et *PKpicc* sont différents de ceux du premier mode de réalisation et du deuxième mode de réalisation.

L'enrôlement (voir section A ci-dessus), l'échange de clés (voir section B ci-dessus) peuvent être identiques à ceux du premier mode de réalisation.

Une clé masquée *maskedPK* est calculée comme dans le premier mode de réalisation : on a donc :

$$maskedPK = g^{f(PIN) * SKpcd}$$

$$PK' = maskedPK^{(1/f(PIN')}$$

Dans le troisième mode de réalisation, les traitements opérés par les dispositifs P et S sur la base des clés *PK'* et *PKpicc* sont typiques d'un schéma d'identification de « Randomized Schnorr », documenté ici : http://dl.acm.org/citation.cfm?id=1533086, ainsi que dans l'article « Cryptanalysis of EC-RAC, a RFID Identification Protocol », par Julien Bringer, Hervé Chabanne et Thomas Icart.

Le deuxième dispositif P calcule alors 130 les données suivantes :

$$x = g^{r1}$$

$$z = PK'^{(r2)}$$

où $r1$ et $r2$ sont choisis de façon aléatoire.

Le deuxième dispositif P transmet 132 au premier dispositif S les données x et z par l'intermédiaire du troisième dispositif D.

Par ailleurs, le premier dispositif S transmet 134 une donnée de défi c (« challenge » en anglais) par l'intermédiaire du troisième dispositif D. La donnée de défi est par exemple générée par le premier dispositif S sur réception des données *x, z.*

Le deuxième dispositif P génère 136 une donnée de preuve y sur la base de la donnée de défi c et de sa clé privée *SKpicc,* par exemple comme suit :

$$y = r1 + SKpicc * c + r2$$

Le deuxième dispositif P transmet 138 au premier dispositif S la donnée de preuve y par l'intermédiaire du troisième dispositif D.

Le premier dispositif vérifie 140 la donnée de preuve y. Par exemple, le premier dispositif S vérifie 140 si:

$$PKpcd^{y} * x^{(-SKpcd)} * z^{(-1)} = PKpicc^{(SKpcd * c)}$$

Cette égalité est vérifiée si et seulement si *PIN = PIN'.*

Dans le troisième mode de réalisation, les premières et deuxièmes données générées respectivement par les premier et deuxième dispositifs S et P ne sont ici pas deux clés susceptibles de former un secret partagé, mais sont formées par les données z et y (deuxièmes données) et le terme $PKpicc^{(SKpcd * c)}$ (première donnée). Par ailleurs, la condition prédéterminée à remplir est que les deux termes de l'équation ci-dessus soient égaux.

La troisième clé (PK') prend donc encore une valeur adaptée pour que la condition prédéterminée soit remplie seulement si les données d'épreuve *(PIN')* acquises sont identiques à des données secrètes de référence *(PIN)* associées au deuxième dispositif (P).

Si cette égalité est vérifiée, alors les deux dispositifs S et P sont mis en relation sécurisée.

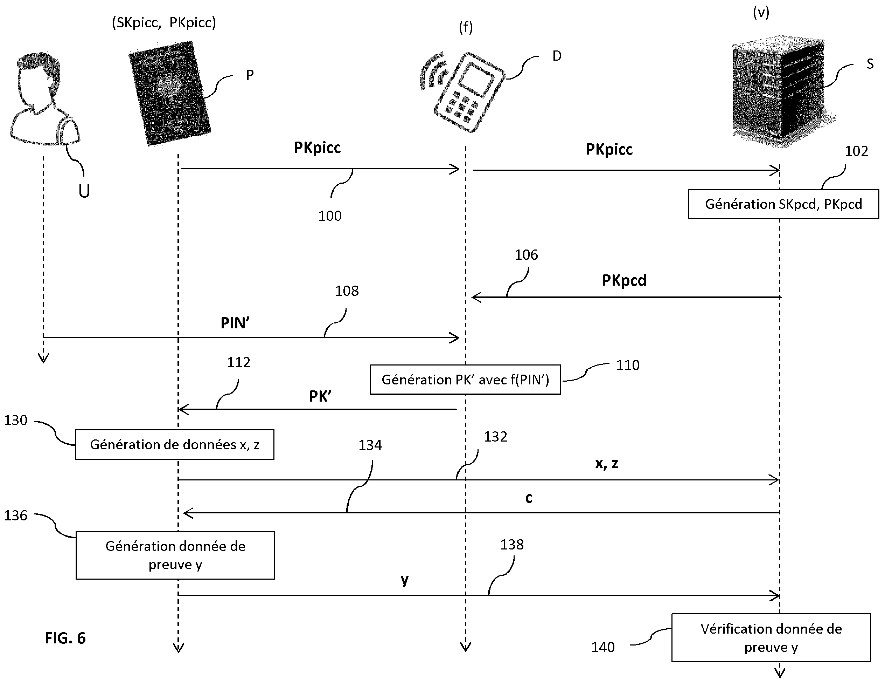

Un quatrième mode de réalisation de procédé de mise en relation sécurisée des dispositifs S et P est illustré en **figure 6.**

Ce quatrième mode de réalisation diffère du troisième mode de réalisation par les caractéristiques suivantes.

Aucune clé masquée n'est générée. Comme dans le deuxième mode de réalisation, le premier dispositif S transmet sa clé publique *PKpcd* au dispositif D, et la clé PK' est calculée par le troisième dispositif D de la même manière :

$$PK' = PKpcd^{f(PIN')}$$

Par ailleurs, le premier dispositif S vérifie 140 si :

$$PKpcd^{y} * x^{(-SKpcd)} * z^{(-1/f(PIN))} = PKpicc^{(SKpcd * c)}$$

On peut également écrire cette relation comme suit :

$$PKpcd^{y} * x^{(-SKpcd)} = z^{(1/f(PIN))} * PKpicc^{(SKpcd * c)}$$

La première donnée est le terme de droite de l'une de ces deux relations équivalentes. Cette égalité est vérifiée si et seulement si *PIN = PIN'.*

Contrairement au troisième mode de réalisation, cette égalité fait intervenir le vérificateur des données secrètes de référence.

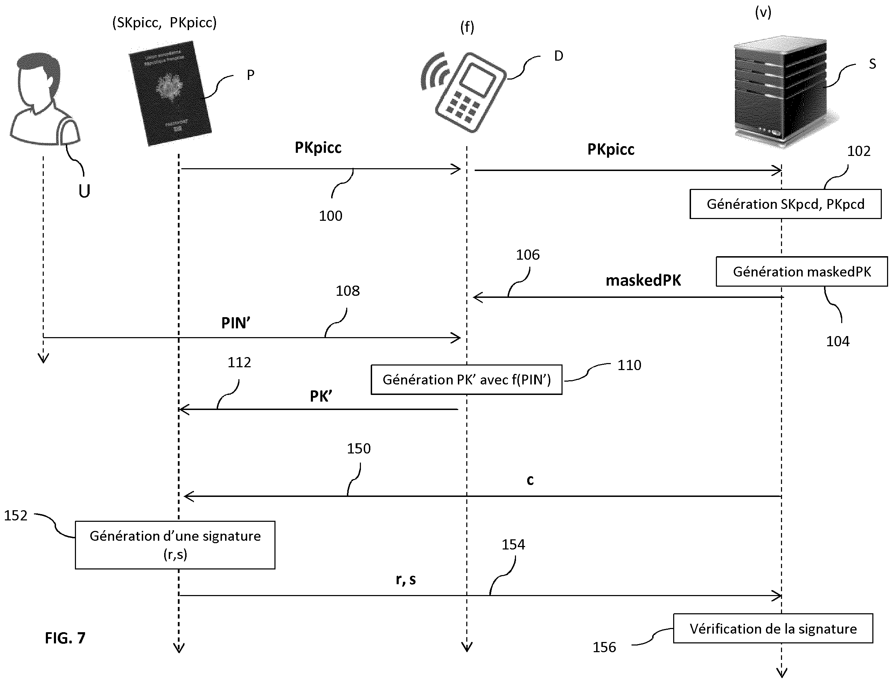

Un cinquième mode de réalisation de procédé de mise en relation sécurisée des dispositifs S et P est illustré en **figure 7.**

Dans ce cinquième mode de réalisation, les traitements opérés par les dispositifs P et S sur la base des clés *PK'* et *PKpicc* sont encore différents des modes de réalisation précédents.

L'enrôlement (voir section A ci-dessus), l'échange de clés (voir section B ci-dessus) peuvent être identiques à ceux du premier mode de réalisation.

Dans le quatrième mode de réalisation, les clés *PK'* et *PKpicc* sont utilisées pour mettre en oeuvre un algorithme de signature numérique.

Dans ce qui suit, on prend l'exemple non limitatif d'un algorithme à partir de ECDSA (« Elliptic Curve Digital Signature Algorithm » en anglais), dans lequel :

$$PKpicc = SKpicc * g$$

$$PKpcd = SKpcd * g$$

où l'élément g est un point de courbe elliptique.

La clé masquée maskedPK et la clé PK' sont générées 104, 110 selon les mêmes calculs que ceux exposés en relation avec le premier mode de réalisation. On a :

$$maskedPK = g^{f(PIN) * SKpcd}$$

$$PK' = maskedPK^{(1/f(PIN'))}$$

Le premier dispositif S transmet par ailleurs 150 une donnée de défi c (« challenge ») au deuxième dispositif P par l'intermédiaire du troisième dispositif D.

Le deuxième dispositif P calcule 152 les données suivantes :

$$(x, y) = k.PK'$$

$$r = x \bmod n$$

$$s = k^{(-1)} \left( H(c) + r * SKpicc \right) \bmod n$$

où (*x,y*) désigne les coordonnées d'un point d'une courbe elliptique, *k* est un scalaire choisi aléatoirement, *H* est une fonction prédéterminée (de préférence à sens unique voire de hachage), et n est un entier prédéterminé. Il est à noter que les données x, z, r, H et s ne revêtent pas que les données du même nom décrites dans le troisième mode de réalisation.

La paire de données (*r,s*) constituent une signature de la donnée de défi *c.*

Le deuxième dispositif P transmet 154 au premier dispositif S la signature (*r,s*) ainsi, par l'intermédiaire du troisième dispositif D.

Le premier dispositif met en oeuvre une vérification 146 du caractère valide de cette signature pour la clé publique *PKpicc* dans le groupe généré par *PKpcd*.

La vérification 156 comprend les calculs suivants :

$$w = s^{(-1)} \bmod n$$

$$(x', y') = [w * H(c) \bmod n].PKpcd + [[w * r \bmod n] * SKpcd].PKpicc$$

On a alors *x' = r* si et seulement si *PIN = PIN'*. La signature est valide dans ce cas d'égalité.

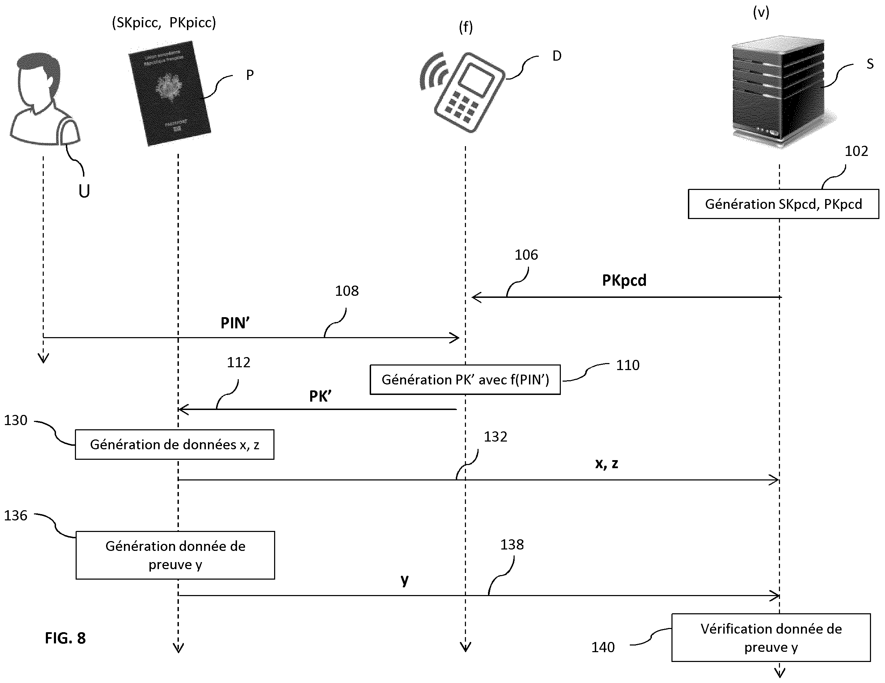

Un sixième mode de réalisation de procédé de mise en relation sécurisée des dispositifs S et P est illustré en **figure 8.**

Ce sixième mode de réalisation diffère du quatrième mode de réalisation par le fait que la clé publique *PKpicc* du deuxième dispositif P n'est pas transmise au premier dispositif S.

Par ailleurs, la donnée de défi c n'est pas transmise au deuxième dispositif P. Le dispositif P mémorise en effet déjà une pluralité de données de défi c.

Le premier dispositif S mémorise de son côté une pluralité de clés à usage unique qui dépendent chacune d'une donnée de défi et d'une clé publique PKpicc propre à un dispositif respectif tel que le dispositif P.

Pour mettre en oeuvre la vérification 140, le premier dispositif S utilise non pas la clé publique *PKpicc,* qui lui est inconnue, mais utilise une des clés à usage unique, qui vient remplacer le terme *PKpicc^c* dans les deux égalités décrites en relation avec le quatrième mode de réalisation.

### *Autres variantes de réalisation*

L'invention peut encore faire l'objet d'autres variantes, qui sont toutes applicables aux différents modes de réalisation décrits ci-dessus.

Dans chacun des modes de réalisation décrits précédemment, les données d'épreuve *PIN* sont un code saisi par un utilisateur du troisième dispositif D, via une interface de saisie 24 telle qu'un clavier ou un écran tactile. Alternativement, les données d'épreuves et/ou les données secrètes de référence sont représentatives d'une donnée biométrique acquise par le capteur biométrique ou la caméra du troisième dispositif D. La donnée biométrique est par exemple une empreinte de doigt, de visage, etc.

Au cours de l'enrôlement, l'utilisateur utilise le capteur biométrique ou la caméra du dispositif D, lequel transfère l'empreinte acquise au premier dispositif S en vue du stockage d'un vérificateur *v* associé dans la base de données du premier dispositif S. Cette variante est applicable à chacun des trois modes de réalisation précédemment décrits.

Il a été présenté précédemment deux types de relations entre les clés *PKpcd* et *SKpcd* du premier dispositif S et les clés *PKpicc* et *SKpicc* du deuxième dispositif P.

Une première relation se fondant sur une multiplication par un scalaire g

$$PKpicc = SKpicc * g$$

$$PKpcd = SKpcd * g$$

Une deuxième relation se fondant sur une exponentiation :

$$PKpicc = g^{SKpicc}$$

$$PKpcd = g^{SKpcd}$$

Ces deux relations alternatives sont applicables à chacun des modes de réalisation précédemment décrits.

Par ailleurs, d'autres calculs de *PK'* peuvent également être envisagés, parmi lesquels :

$$PK' = PKpcd^{1+f(PIN')}$$

$$PK' = PKpcd^{f_2(f(PIN'))}$$

où $f_2$ est une fonction prédéterminée, de préférence à sens unique voir de hachage. Bien entendu, l'étape de génération de la donnée K par le dispositif S utilise, dans la variante sans clé masquée, une formule adaptée à ces calculs alternatifs de sorte que que *PIN = PIN'* si et seulement si *K = K'*.

D'autres calculs de *maskedPK* peuvent en outre être envisagés.

Par ailleurs, plutôt que de déclencher l'acquisition des données d'épreuves PIN' en réponse à la réception par le troisième dispositif D, ces données d'épreuves peuvent avoir été préalablement mémorisées dans la mémoire 20 du troisième dispositif D. Dans ce cas, les données PIN' mémorisées sont lues par le processeur 18 de sorte à générer la donnée *PK'.*

En outre, comme cela a été illustré dans le cadre particulier du sixième mode de réalisation, une transmission de la clé publique *PKpicc* par le deuxième dispositif P au premier dispositif S n'est pas obligatoire. Le premier dispositif S peut en effet générer une pluralité de premières données (au cours de l'étape 114 ou 140 ou 156, selon le mode de réalisation), chaque première donnée étant générée en utilisant une des clés publiques préalablement mémorisées dans la base de données de la mémoire 6. Toutes les premières données sont alors testées au cours des étapes 122 (tentative de déchiffrement) ou 140 (vérification d'une donnée de preuve) ou 156 (vérification de signature), selon le mode de réalisation concerné. Si le test réussit pour l'une des premières données, cela signifie que la clé publique $PKpicc$ sur la base de laquelle cette première donnée a été générée est bien celle du deuxième dispositif P en présence ; une mise en relation sécurisée entre le premier dispositif S et le deuxième dispositif P est alors mise en oeuvre. Si aucun des tests ne réussit, cette mise en relation sécurisée n'est pas mise en oeuvre.

**Revendications**

1. Procédé de mise en relation sécurisée d'un premier dispositif (S) avec un deuxième dispositif (P), le procédé comprenant des étapes de:

    • génération (114), par le premier dispositif (S), d'au moins une première donnée (K) dépendant d'une clé privée ($SKpcd$) propre au premier dispositif (S) et dépendant d'une clé publique ($PKpicc$) propre au deuxième dispositif (P),
    • génération (116), par le deuxième dispositif (P), d'au moins une deuxième donnée ($K'$) dépendant d'une clé privée ($SKpicc$) propre au deuxième dispositif (P) associée à la clé publique $(PKpicc)$ propre au deuxième dispositif (P), et dépendant d'une troisième donnée ($PK'$), la troisième donnée ($PK'$) dépendant d'une donnée publique $(PKpcd, maskedPK)$ propre au premier dispositif (S),
    • mise en oeuvre d'un test (118, 120, 122) vérifiant si les première et deuxième données ($K,K'$) remplissent une condition prédéterminée, et mise en relation sécurisée du premier dispositif (S) avec le deuxième dispositif (P) seulement si la condition prédéterminée est remplie,

    le procédé étant **caractérisé en ce qu'**il comprend l'étape suivante mise en oeuvre avant la génération (116) de la deuxième donnée ($K'$):

    • génération (110) de la troisième donnée ($PK'$), la troisième donnée ($PK'$) prenant une valeur adaptée pour que la condition prédéterminée soit remplie seulement si des données d'épreuve ($PIN'$) sont identiques à des données secrètes de référence $(PIN)$ associées au deuxième dispositif (P).

2. Procédé selon la revendication précédente, dans lequel l'étape de génération (110) de la troisième donnée ($PK'$) est mise en oeuvre par un troisième dispositif (D) différent des premier et deuxième dispositifs (S, P).

3. Procédé selon la revendication précédente, dans lequel les données d'épreuves ($PIN'$) sont acquises (108) par le troisième dispositif (D).

4. Procédé selon la revendication précédente, dans lequel l'acquisition des données d'épreuve est mise en oeuvre en réponse à la réception de la donnée publique ($PKpcd, maskedPK$) propre au premier dispositif (S).

5. Procédé selon l'une des revendications 2 à 4, comprenant la transmission (100) au premier dispositif (S) de la clé publique ($PKpicc$) propre au deuxième dispositif (P) par l'intermédiaire du troisième dispositif (D).

6. Procédé selon l'une des revendications précédentes, dans lequel la troisième donnée ($PK'$) dépend à la fois des données d'épreuve ($PIN'$) et des données secrètes de référence ($PIN$) associées au premier dispositif (P).

7. Procédé selon l'une des revendications précédentes, dans lequel la troisième donnée ($PK'$) dépend :

    • d'un vérificateur (v) des données secrètes de référence ($PIN$) obtenu par un calcul comprenant l'application d'une fonction, par exemple à sens unique, aux données secrètes de référence ($PIN$), et
    • de l'image des données d'épreuve ($PIN'$) par application de la fonction.

8. Procédé selon l'une des revendications précédentes, dans lequel la troisième donnée (PK') dépend d'une clé masquée ($maskedPK$), la clé masquée étant générée par le premier dispositif (S) et dépendant :

    • des données secrètes de référence ($PIN$) associées au deuxième dispositif (P), et
    • de la clé privée ($SKpcd$) propre au premier dispositif (S) et/ou de la clé publique ($PKpcd$) propre au premier dispositif (S).

9. Procédé selon l'une des revendications 1 à 5, dans lequel la troisième donnée (*PK'*) dépend des données d'épreuve (*PIN'*) mais ne dépend pas des données secrètes de référence (*PIN*) associées au deuxième dispositif (P), et dans lequel la première donnée (*K*) dépend des données secrètes de référence (*PIN*) associées au deuxième dispositif (P).

10. Procédé selon la revendication précédente, dans lequel :

   • la troisième donnée (*PK'*) dépend de l'image des données d'épreuve (*PIN'*) par application d'une fonction, par exemple à sens unique, et
   • la génération de la première donnée générée par le premier dispositif (S) utilise un vérificateur (v) des données secrètes de référence (*PIN*) obtenu par un calcul comprenant l'application de la fonction aux données secrètes de référence (*PIN*).

11. Procédé selon l'une des revendications précédentes, dans lequel

   • le premier dispositif (S) transmet au deuxième dispositif une donnée de défi,
   • la deuxième donnée générée par le deuxième dispositif (P) comprend :

      ◦ une donnée de preuve calculée à partir de la clé privée (*SKpicc*) du deuxième dispositif (P) et de la donnée de défi,
      ◦ une donnée calculée à partir de la troisième donnée (*PK'*),

   • la première donnée générée par le premier dispositif (S) dépend en outre de la donnée de défi.

12. Procédé selon l'une des revendications précédentes, dans lequel le test vérifiant si les première et deuxième données remplissent une condition prédéterminée comprend des sous-étapes de :

   • transmission (138) de l'au moins une deuxième donnée au premier dispositif (S),
   • vérification (140), par le premier dispositif (S), si les valeurs de la première donnée et de la deuxième donnée sont solution d'une équation prédéterminée, la condition prédéterminée étant remplie seulement si la vérification est positive.

13. Produit programme d'ordinateur comprenant des instructions de code de programme pour l'exécution des étapes d'un procédé de mise en relation sécurisée d'un premier dispositif (S) avec un deuxième dispositif (P), lorsque ce programme est exécuté par au moins un processeur, dans lequel le premier dispositif (S) est configuré pour générer au moins une première donnée (*K*) dépendant d'une clé publique (*PKpicc*) propre au deuxième dispositif (P) et dépendant d'une clé privée (*SKpcd*) propre au premier dispositif (S), le procédé comprenant une étape de :

   • transmission au deuxième dispositif (P) d'une troisième donnée (*PK'*) en vue d'une génération, par le deuxième dispositif (P), d'au moins une deuxième donnée (*K'*) dépendant de la troisième donnée (PK') transmise, et dépendant d'une clé privée (*SKpicc*) propre au deuxième dispositif (P) associée à la clé publique (*PKpicc*) propre au deuxième dispositif (P), la troisième donnée (*PK'*) dépendant d'une clé publique (*PKpcd, maskedPK*) propre au premier dispositif (S), de sorte qu'un test vérifiant si les première et deuxième données remplissent une condition prédéterminée puisse être mis en oeuvre, et que les premier et deuxième dispositifs (S, P) soient mis en relation sécurisée seulement si la condition est remplie,

   le produit programme d'ordinateur étant **caractérisé en ce que** le procédé comprend en outre une étape de :

   • génération de la troisième donnée (*PK'*), la troisième donnée (*PK'*) prenant une valeur adaptée pour que la condition prédéterminée soit remplie seulement si des données d'épreuve (*PIN'*) sont identiques à des données secrètes de référence (*PIN*) associées au deuxième dispositif (P).

14. Produit programme d'ordinateur comprenant des instructions de code de programme pour l'exécution des étapes d'un procédé de mise en relation sécurisée d'un premier dispositif (S) avec un deuxième dispositif (P), lorsque ce programme est exécuté par au moins un processeur, le procédé comprenant des étapes de :

   • génération d'au moins une première donnée (K) dépendant d'une clé privée propre au premier dispositif (S) et dépendant d'une clé publique (*PKpicc*) reçue,

• émission d'une clé publique (*PKpcd*) propre au premier dispositif (S) associée à la clé privée propre au premier dispositif (S), en vue de la génération, par le deuxième dispositif (P), d'au moins une deuxième donnée (*K'*) qui dépend

 ◦ d'une clé privée (*SKpicc*) propre au deuxième dispositif (P) associée à la clé publique (*PKpicc*) propre au deuxième dispositif (P), et
 ◦ d'une troisième donnée (*PK'*), la troisième donnée (*PK'*) dépendant de la clé publique (*PKpcd*) émise,

• participation à un test vérifiant si les première et deuxième données remplissent une condition prédéterminée, et mise en relation sécurisée avec le deuxième dispositif seulement si la condition prédéterminée est remplie,

dans lequel la première donnée (K) est de valeur adaptée pour que la condition prédéterminée soit remplie seulement si des données secrètes de référence (*PIN*) associées au deuxième dispositif (P) sont identiques à des données d'épreuve (*PIN'*).

15. Produit programme d'ordinateur comprenant des instructions de code de programme pour l'exécution des étapes d'un procédé de mise en relation sécurisée d'un premier dispositif (S) avec un deuxième dispositif (P), lorsque ce programme est exécuté par au moins un processeur, le procédé comprenant des étapes de :

 • génération d'au moins une première donnée (K) dépendant d'une clé privée (*SKpcd*) propre au premier dispositif (S), et à partir d'une clé publique (*PKpicc*) propre au deuxième dispositif (P),
 • génération d'une clé masquée (*maskedPK*), la clé masquée (*maskedPK*) dépendant de la clé privée (*SKpcd*) propre au dispositif (S) et/ou d'une clé publique *(PKpcd)* propre au premier dispositif (S) associée à la clé privée (*PKpcd*) propre au premier dispositif (S),
 • émission de la clé masquée (*maskedPK*), en vue de la génération, par le deuxième dispositif (P), d'au moins une deuxième donnée (*K'*) dépendant :

 ◦ d'une clé privée (*SKpicc*) propre au deuxième dispositif (P) associée à la clé publique (*PKpicc*) propre au deuxième dispositif (P) et
 ◦ d'une troisième donnée (PK'), la troisième donnée (PK') dépendant de la clé masquée émise (*maskedPK*),

 • participer à un test vérifiant si les première et deuxième données remplissent une condition prédéterminée, et mise en relation sécurisée avec le deuxième dispositif (P) seulement si la condition prédéterminée est remplie,

le produit programme d'ordinateur est **caractérisé en ce que** la clé masquée (*maskedPK*) a une valeur adaptée pour que la condition prédéterminée soit remplie seulement si les données secrètes de référence (*PIN*) associées au deuxième dispositif (P) sont identiques à des données d'épreuve (*PIN'*).

**Patentansprüche**

1. Verfahren zum gesicherten Verbinden einer ersten Vorrichtung (S) mit einer zweiten Vorrichtung (P), wobei das Verfahren Schritte umfasst des:

 - Erzeugens (114), durch die erste Vorrichtung (S), von mindestens einen ersten Daten (K) abhängig von einem privaten Schlüssel (SKpcd), der der ersten Vorrichtung (S) eigen ist, und abhängig von einem öffentlichen Schlüssel (PKpicc), der der zweiten Vorrichtung (P) eigen ist,
 - Erzeugens (116), durch die zweite Vorrichtung (P), von mindestens einen zweiten Daten (K') abhängig von einem der zweiten Vorrichtung (P) eigenen privaten Schlüssel (SKpicc), der dem der zweiten Vorrichtung (P) eigenen öffentlichen Schlüssel (PKpicc) zugeordnet ist, und abhängig von dritten Daten (PK'), wobei die dritten Daten (PK') von öffentlichen Daten (PKpcd, maskedPK) abhängen, die der ersten Vorrichtung (S) eigen sind,
 - Durchführens einer Überprüfung (118, 120, 122), die verifiziert, ob die ersten und zweiten Daten (K, K') eine vorbestimmte Bedingung erfüllen, und gesicherten Verbindens der ersten Vorrichtung (S) mit der zweiten Vorrichtung (P) nur dann, wenn die vorbestimmte Bedingung erfüllt ist,

wobei das Verfahren **dadurch gekennzeichnet ist, dass** es den folgenden Schritt umfasst, der vor dem Erzeugen (116) der zweiten Daten (K') durchgeführt wird:

- Erzeugen (110) der dritten Daten (PK'), wobei die dritten Daten (PK') einen Wert annehmen, der so angepasst ist, dass die vorbestimmte Bedingung nur dann erfüllt ist, wenn Prüfdaten (PIN') mit geheimen Bezugsdaten (PIN), die der zweiten Vorrichtung (P) zugeordnet sind, identisch sind.

2. Verfahren nach dem vorstehenden Anspruch, wobei der Schritt des Erzeugens (110) der dritten Daten (PK') von einer dritten Vorrichtung (D) durchgeführt wird, die sich von der ersten und zweiten Vorrichtung (S, P) unterscheidet.

3. Verfahren nach dem vorstehenden Anspruch, wobei die Prüfdaten (PIN') von der dritten Vorrichtung (D) erfasst (108) werden.

4. Verfahren nach dem vorstehenden Anspruch, wobei das Erfassen der Prüfdaten in Reaktion auf den Empfang der öffentlichen Daten (PKpcd, maskedPK) durchgeführt wird, die der ersten Vorrichtung (S) eigen sind.

5. Verfahren nach einem der Ansprüche 2 bis 4, das das Übertragen (100) des öffentlichen Schlüssels (PKpicc), der der zweiten Vorrichtung (P) eigen ist, mittels der dritten Vorrichtung (D) an die erste Vorrichtung (S) umfasst.

6. Verfahren nach einem der vorstehenden Ansprüche, wobei die dritten Daten (PK') gleichzeitig von den Prüfdaten (PIN') und den geheimen Bezugsdaten (PIN) abhängen, die der ersten Vorrichtung (P) zugeordnet sind.

7. Verfahren nach einem der vorstehenden Ansprüche, wobei die dritten Daten (PK') abhängen:

- von einem Verifikator (v) der geheimen Bezugsdaten (PIN), der über eine Berechnung erhalten wird, die die Anwendung einer Funktion, zum Beispiel Einwegfunktion, auf die geheimen Bezugsdaten (PIN) umfasst, und
- von der Abbildung der Prüfdaten (PIN') durch Anwendung der Funktion.

8. Verfahren nach einem der vorstehenden Ansprüche, wobei die dritten Daten (PK') von einem maskierten Schlüssel (maskedPK) abhängen, wobei der maskierte Schlüssel von der ersten Vorrichtung (S) erzeugt wird und abhängt:

- von den geheimen Bezugsdaten (PIN), die der zweiten Vorrichtung (P) zugeordnet sind, und
- vom privaten Schlüssel (SKpcd), der der ersten Vorrichtung (S) eigen ist, und/oder vom öffentlichen Schlüssel (PKpcd), der der ersten Vorrichtung (S) eigen ist.

9. Verfahren nach einem der Ansprüche 1 bis 5, wobei die dritten Daten (PK') von den Prüfdaten (PIN') abhängen, aber nicht von den geheimen Bezugsdaten (PIN) abhängen, die der zweiten Vorrichtung (P) zugeordnet sind, und wobei die ersten Daten (K) von den geheimen Bezugsdaten (PIN) abhängen, die der zweiten Vorrichtung (P) zugeordnet sind.

10. Verfahren nach dem vorstehenden Anspruch, wobei:

- die dritten Daten (PK') von der Abbildung der Prüfdaten (PIN') durch Anwendung einer Funktion, zum Beispiel Einwegfunktion, abhängen, und
- das Erzeugen der ersten Daten, die von der ersten Vorrichtung (S) erzeugt werden, einen Verifikator (v) der geheimen Bezugsdaten (PIN) verwendet, der über eine Berechnung erhalten wird, die die Anwendung der Funktion auf die geheimen Bezugsdaten (PIN) umfasst.

11. Verfahren nach einem der vorstehenden Ansprüche, wobei

- die erste Vorrichtung (S) Herausforderungsdaten an die zweite Vorrichtung überträgt,
- die von der zweiten Vorrichtung (P) erzeugten zweiten Daten umfassen:

-- Prüfdaten, die auf Grundlage des privaten Schlüssels (SKpicc) der zweiten Vorrichtung (P) und der Herausforderungsdaten berechnet werden,
-- Daten, die auf Grundlage der dritten Daten (PK') berechnet werden,

- die von der ersten Vorrichtung (S) erzeugten ersten Daten weiter von den Herausforderungsdaten abhängen.

12. Verfahren nach einem der vorstehenden Ansprüche, wobei die Überprüfung, die verifiziert, ob die ersten und zweiten Daten eine vorbestimmte Bedingung erfüllen, Teilschritte umfasst des:

- Übertragens (138) der mindestens einen zweiten Daten an die erste Vorrichtung (S),
- Verifizierens (140), durch die erste Vorrichtung (S), ob die Werte der ersten Daten und der zweiten Daten Lösung einer vorbestimmten Gleichung sind, wobei die vorbestimmte Bedingung nur dann erfüllt ist, wenn die Verifizierung positiv ist.

13. Computerprogrammprodukt, das Programmcodeanweisungen für das Ausführen der Schritte eines Verfahrens zum gesicherten Verbinden einer ersten Vorrichtung (S) mit einer zweiten Vorrichtung (P) umfasst, wenn dieses Programm von mindestens einem Prozessor ausgeführt wird, wobei die erste Vorrichtung (S) dafür konfiguriert ist, mindestens eine erste Daten (K) abhängig von einem öffentlichen Schlüssel (PKpicc), der der zweiten Vorrichtung (P) eigen ist, und abhängig von einem privaten Schlüssen (SKpcd), der der ersten Vorrichtung (S) eigen ist, zu erzeugen, wobei das Verfahren einen Schritt umfasst des:

- Übertragens von dritten Daten (PK') an die zweite Vorrichtung (P) im Hinblick auf eine Erzeugung, durch die zweite Vorrichtung (P), von mindestens einen zweiten Daten (K') abhängig von den übertragenen dritten Daten (PK'), und abhängig von einem der zweiten Vorrichtung (P) eigenen privaten Schlüssel (SKpicc), der dem der zweiten Vorrichtung (P) eigenen öffentlichen Schlüssel (PKpicc) zugeordnet ist, wobei die dritten Daten (PK') von einem öffentlichen Schlüssel (PKpcd, maskedPK) abhängen, der der ersten Vorrichtung (S) eigen ist, derart, dass eine Überprüfung durchgeführt werden kann, die verifiziert, ob die ersten und zweien Daten eine vorbestimmte Bedingung erfüllen, und dass die erste und zweite Vorrichtung (S, P) nur dann gesichert verbunden werden, wenn die Bedingung erfüllt ist,
wobei das Computerprogrammprodukt **dadurch gekennzeichnet ist, dass** das Verfahren weiter einen Schritt umfasst des:
- Erzeugens der dritten Daten (PK'), wobei die dritten Daten (PK') einen Wert annehmen, der so angepasst ist, dass die vorbestimmte Bedingung nur dann erfüllt ist, wenn Prüfdaten (PIN') mit geheimen Bezugsdaten (PIN), die der zweiten Vorrichtung (P) zugeordnet sind, identisch sind.

14. Computerprogrammprodukt, das Programmcodeanweisungen für das Ausführen der Schritte eines Verfahrens zum gesicherten Verbinden einer ersten Vorrichtung (S) mit einer zweiten Vorrichtung (P) umfasst, wenn dieses Programm von mindestens einem Prozessor ausgeführt wird, wobei das Verfahren Schritte umfasst des:

- Erzeugens von mindestens einen ersten Daten (K) abhängig von einem privaten Schlüssel, der der ersten Vorrichtung (S) eigen ist, und abhängig von einem empfangenen öffentlichen Schlüssel (PKpicc),
- Sendens eines der ersten Vorrichtung (S) eigenen öffentlichen Schlüssels (PKpcd), der dem der ersten Vorrichtung (S) eigenen privaten Schlüssel zugeordnet ist, im Hinblick auf das Erzeugen, durch die zweite Vorrichtung (P), von mindestens einen zweiten Daten (K'), die abhängen

-- von einem der zweiten Vorrichtung (P) eigenen privaten Schlüssel (SKpicc), der dem der zweiten Vorrichtung (P) eigenen öffentlichen Schlüssel (PKpicc) zugeordnet ist, und
-- von dritten Daten (PK'), wobei die dritten Daten (PK') vom gesendeten öffentlichen Schlüssel (PKpcd) abhängen,

- Teilnehmens an einer Überprüfung, die verifiziert, ob die ersten und zweiten Daten eine vorbestimmte Bedingung erfüllen, und gesicherten Verbindens mit der zweiten Vorrichtung nur dann, wenn die vorbestimmte Bedingung erfüllt ist,

wobei die ersten Daten (K) einen Wert aufweisen, der so angepasst ist, dass die vorbestimmte Bedingung nur dann erfüllt ist, wenn geheime Bezugsdaten (PIN), die der zweiten Vorrichtung (P) zugeordnet sind, mit Prüfdaten (PIN') identisch sind.

15. Computerprogrammprodukt, das Programmcodeanweisungen für das Ausführen der Schritte eines Verfahrens zum gesicherten Verbinden einer ersten Vorrichtung (S) mit einer zweiten Vorrichtung (P) umfasst, wenn dieses Programm von mindestens einem Prozessor ausgeführt wird, wobei das Verfahren Schritte umfasst des:

- Erzeugens von mindestens einen ersten Daten (K) abhängig von einem privaten Schlüssel (SKpcd), der der ersten Vorrichtung (S) eigen ist, und auf Grundlage eines öffentlichen Schlüssels (PKpicc), der der zweiten Vorrichtung (P) eigen ist,
- Erzeugens eines maskierten Schlüssels (maskedPK), wobei der maskierte Schlüssel (maskedPK) von dem der Vorrichtung (S) eigenen privaten Schlüssel (SKpcd), und/oder von einem der ersten Vorrichtung (S) eigenen öffentlichen Schlüssel (PKpcd), der dem der ersten Vorrichtung (S) eigenen privaten Schlüssel (PKpcd) zugeordnet ist, abhängt,
- Sendens des maskierten Schlüssels (maskedPK) im Hinblick auf das Erzeugen, durch die zweite Vorrichtung (P), von mindestens einen zweiten Daten (K') abhängig:

-- von einem der zweiten Vorrichtung (P) eigenen privaten Schlüssel (SKpicc), der dem der zweiten Vorrichtung (P) eigenen öffentlichen Schlüssel (PKpicc) zugeordnet ist, und
-- von dritten Daten (PK'), wobei die dritten Daten (PK') von dem gesendeten maskierten Schlüssel (maskedPK) abhängen,

- Teilnehmens an einer Überprüfung, die verifiziert, ob die ersten und zweiten Daten eine vorbestimmte Bedingung erfüllen, und gesicherten Verbindens mit der zweiten Vorrichtung (P) nur dann, wenn die vorbestimmte Bedingung erfüllt ist,

das Computerprogrammprodukt ist **dadurch gekennzeichnet, dass** der maskierte Schlüssel (maskedPK) einen Wert aufweist, der so angepasst ist, dass die vorbestimmte Bedingung nur dann erfüllt ist, wenn die geheimen Bezugsdaten (PIN), die der zweiten Vorrichtung (P) zugeordnet sind, mit Prüfdaten (PIN') identisch sind.


**Claims**

1. Method for putting a first device (S) in secure communication with a second device (P), the method comprising steps of:

   • generating (114), by the first device (S), at least one first datum (K) dependent on a private key (*SKpcd*) specific to the first device (S) and dependent on a public key (*PKpicc*) specific to the second device (P),
   • generating (116), by the second device (P), at least one second datum (*K'*) dependent on a private key (*SKpicc*) specific to the second device (P) associated with the public key (*PKpicc*) specific to the second device (P), and dependent on a third datum (*PK'*), the third datum (*PK'*) being dependent on a public datum (*PKpcd, maskedPK*) specific to the first device (S),
   • implementing a test (118, 120, 122) verifying whether the first and second data (*K,K'*) meet a predetermined condition, and putting the first device (S) in secure communication with the second device (P) only if the predetermined condition is met,

   the method being **characterized in that** it comprises the following step implemented before the generation (116) of the second datum (*K'*):

   • generating (110) the third datum (*PK'*), the third datum (*PK'*) taking on a value adapted so that the predetermined condition is met only if input data (*PIN'*) are identical to reference secret data (*PIN*) associated with the second device (P).

2. Method according to the preceding claim, wherein generating (110) the third datum (*PK'*) is performed by a third device (D) differing from the first and second devices (S, P).

3. Method according to the preceding claim, wherein the input data (*PIN'*) are acquired (108) by the third device (D).

4. Method according to the preceding claim, wherein acquisition of the input data is carried out in response to receipt of the public datum (*PKpcd, maskedPK*) specific to the first device (S).

5. Method according to one of claims 2 to 4, comprising transmitting (100) to the first device (S) of the public key (*PKpicc*) specific to the second device (P) via the third device (D).

6. Method according to one of the preceding claims, wherein the third datum (*PK'*) is dependent both on the input data (*PIN'*) and on the reference secret data (*PIN*) associated with the first device (P).

7. Method according to one of the preceding claims, wherein the third datum *(PK')* is dependent on:

   • a verifier (v) of the reference secret data (*PIN*), obtained by a calculation comprising applying a function, e.g.

one-way function, to the reference secret data (*PIN*), and
• the image of the input data (*PIN'*) through the function.

8. Method according to one of the preceding claims, wherein the third datum (PK') is dependent on a masked key (*maskedPK*), the masked key being generated by the first device (S) and dependent on:

   • the reference secret data (*PIN*) associated with the second device (P), and
   • the private key (*SKpcd*) specific to the first device (S) and/or the public key (*PKpcd*) specific to the first device (S).

9. Method according to one of claims 1 to 5, wherein the third datum (*PK'*) is dependent on the input data (*PIN'*) but is not dependent on the reference secret data (*PIN*) associated with the second device (P), and wherein the first datum (*K*) is dependent on the reference secret data (*PIN*) associated with the second device (P).

10. Method according to the preceding claim, wherein:

   • the third datum (*PK'*) is dependent on the image of the input data (*PIN'*) through application of a function e.g. a one-way function, and
   • the generation of the first datum generated by the first device (S) uses a verifier (v) of the reference secret data (*PIN*) obtained by a calculation comprising the application of the function to the reference secret data (*PIN*).

11. Method according to one of the preceding claims wherein:

   • the first device (S) transmits a challenge datum to the second device,
   • the second datum generated by the second device (P) comprises:

      ◦ a proof datum calculated from the private key (*SKpicc*) of the second device (P) and from the challenge datum,
      ◦ a datum calculated from the third datum (*PK'*),

   • the first datum generated by the first device (S) also depends on the challenge datum.

12. Method according to one of the preceding claims, wherein the test verifying whether the first and second data meet a predetermined condition comprises sub-steps of:

   • transmitting (138) the at least one second datum to the first device (S),
   • verifying (140), by the first device (S), whether the values of the first datum and second datum are the solution of a predetermined equation, wherein the predetermined condition is met only if verification is positive.

13. Computer program product comprising program code instructions to execute the steps of a method for putting a first device (S) in secure communication with a second device (P), when this program is executed by at least one processor, wherein the first device (S) is configured to generate at least one first datum (*K*) dependent on a public key (*PKpicc*) specific to the second device (P) and dependent on a private key (*SKpcd*) specific to the first device (S), the method comprising:

   • transmitting to the second device (P) a third datum (*PK'*) for the generation by the second device (P) of at least one second datum dependent on the transmitted third datum (*PK'*), and dependent on a private key (*SKpicc*) specific to the second device (P) associated with the public key (*PKpicc*) specific to the second device (P), the third datum (*PK'*) being dependent on a public key (*PKpcd, maskedPK*) specific to the first device (S), so that a test verifying whether the first and second data meet a predetermined condition can be implemented, and the first and second devices (S, P) only being put in secure communication if the condition is met,

   the computer program product being **characterized in that** the method further comprises a step of:

   • generating the third datum (*PK'*), the third datum (*PK'*) taking on a value adapted so that the predetermined condition is met only if the input data (*PIN'*) are identical to reference secret data (*PIN*) associated with the second device (P).

14. Computer program product comprising program code instructions for execution of the steps of a method for putting a first device (S) in secure communication with a second device (P), when this program is executed by at least one processor, the method comprising steps of:

- generating at least one first datum (*K*) dependent on a private key specific to the first device (S) and dependent on a received public key (*PKpicc*),
- transmitting a public key (*PKpcd*) specific to the first device (S), associated with the private key specific to the first device (S), for the generation by the second device (P) of at least one second datum (*K'*) which is dependent on:

  ◦ a private key (*SKpicc*) specific to the second device (P), associated with the public key (*PKpicc*) specific to the second device (P), and
  ◦ a third datum (*PK'*), the third datum (*PK'*) being dependent on the transmitted public key (*PKpcd*),

- participating in a test verifying whether that the first and second data meet a predetermined condition, and putting in secure communication with the second device only if the predetermined condition is met,

wherein the first datum (K) has a value adapted so that the predetermined condition is met only if reference secret data (*PIN*) associated with the second device (P) are identical to input data (*PIN'*).

15. Computer program product comprising program code instructions to execute the steps of a method for putting a first device (S) in secure communication with a second device (P) when this program is executed by at least one processor, the method comprising steps of:

- generating at least one first datum (*K*) dependent on a private key (*SKpcd*) specific to the first device (S), and from a public key (*PKpicc*) specific to the second device (P),
- generating a masked key (*maskedPK*), the masked key (*maskedPK*) being dependent on the private key (*SKpcd*) specific to the first device (S) and/or on a public key (*PKpcd*) specific to the first device (S) associated with the private key (*PKpcd*) specific to the first device (S),
- transmitting the masked key (*maskedPK*), for the generation by the second device (P) of at least one second datum (*K'*) dependent on:

  ◦ a private key (*SKpicc*) specific to the second device (P) associated with the public key (*PKpicc*) specific to the second device (P), and
  ◦ a third datum (*PK'*), the third datum (*PK'*) being dependent on the transmitted masked key (*maskedPK*),

- participating in a test verifying whether the first and second data meet a predetermined condition, and putting in secure communication with the second device (P) only if the predetermined condition is met,

the computer program product is **characterized in that** the masked key (*maskedPK*) has a value adapted so that the predetermined condition is met only if the reference secret data (*PIN*) associated with the second device (P) are identical to input data (*PIN'*).

FIG. 1

FIG. 2

(SKpicc, PKpicc)

(f)

(v)

P

D

S

**PKpicc**

**PKpicc**

102

100

Génération SKpcd, PKpcd

U

106

Génération maskedPK

108

**maskedPK**

104

**PIN'**

Génération PK' avec f(PIN')    110

112

**PK'**

116    Génération de K'=KA(SKpicc,PK')

114    Génération de K=KA(SKpcd,PKpicc)

118    Chiffrement avec K'

120

Déchiffrement avec K

124

122

**FIG. 3**

**Canal sécurisé basé sur K**

FIG. 4

(SKpicc, PKpicc)

(f)

(v)

P

D

S

PKpicc ——→ 100 ——→ PKpicc ——→ 102

Génération SKpcd, PKpcd

U

106

PKpcd ←——

108

PIN' ——→

Génération PK' avec f(PIN') — 110

112

PK' ←——

116 — Génération de K'=KA(SKpicc,PK')

114 — Génération de K=KA(SKpcd,PKpicc,v)

118 — Chiffrement avec K'

120

Déchiffrement avec K

124

122

Canal sécurisé basé sur K

EP 3 270 315 B1

(SKpicc, PKpicc)

(f)

(v)

U

P

D

S

**PKpicc**

**PKpicc**

102

100

Génération SKpcd, PKpcd

106

Génération maskedPK

108

**maskedPK**

104

**PIN'**

112

Génération PK' avec f(PIN')     110

**PK'**

130

Génération de données x, z

134     132

**x, z**

**c**

136

Génération donnée de preuve y

138

**y**

Vérification donnée de preuve y

140

**FIG. 5**

FIG. 6

EP 3 270 315 B1

EP 3 270 315 B1

(SKpicc, PKpicc)

(f)

(v)

P

D

S

U

**PKpicc**

**PKpicc**

102

100

Génération SKpcd, PKpcd

106

Génération maskedPK

108

**maskedPK**

**PIN'**

104

112

Génération PK' avec f(PIN')

110

**PK'**

150

**c**

152

Génération d'une signature
(r,s)

154

**r, s**

Vérification de la signature

156

**FIG. 7**

30

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- TR 031101

- US 20050069137 A